## Europäisches Patentamt

## European Patent Office

## Office européen des brevets

(11) Veröffentlichungsnummer: **0 247 313**
**A2**

(12) **EUROPÄISCHE PATENTANMELDUNG**

(21) Anmeldenummer: **87104206.5**

(51) Int. Cl.4: **G01N 27/12**

(22) Anmeldetag: **21.03.87**

(30) Priorität: **16.04.86 DE 3612726**

(43) Veröffentlichungstag der Anmeldung:
**02.12.87 Patentblatt 87/49**

(84) Benannte Vertragsstaaten:
**DE ES FR GB IT SE**

(71) Anmelder: **ROBERT BOSCH GMBH**
**Postfach 50**
**D-7000 Stuttgart 1(DE)**

(72) Erfinder: **Fedter, Horst, Ing. grad.**
**Wiedenbachweg 14**
**D-7582 Bühlertal(DE)**
Erfinder: **Grünwald, Werner, Dr.Dipl.-Phys.**
**Robert-Schuman Strasse 21**
**D-7016 Gerlingen(DE)**
Erfinder: **Köder, Manfred**
**Vesouler Strasse 3**
**D-7016 Gerlingen(DE)**
Erfinder: **Nolting, Peter, Dipl.-Ing.**
**Scheffelweg 24**
**D-7582 Bühlertal(DE)**
Erfinder: **de la Prieta, Claudio**
**Schwarzwaldstrasse 81**
**D-7000 Stuttgart 80(DE)**
Erfinder: **Schmid, Kurt**
**Schlossstrasse 55**
**D-7257 Ditzingen-Schöckingen(DE)**

(54) **Feuchtesensor.**

(57) Es werden ein Verfahren zur Herstellung eines Sensors zur Bestimmung der relativen Feuchte aufgrund der Widerstandsänderung eines keramischen Materials, ein Stoffgemisch, das bei diesem Verfahren eingesetzt wird sowie ein nach dem Verfahren hergestellter Sensor vorgeschlagen. Das Stoffgemisch enthält $Cr_2O_3$, $V_2O_5$ und $Na_2WO_4$ im Gewichtsverhältnis 1,5 bis 3,0:1:1, insbesondere 2,5:1:1. Dieses Stoffgemisch wird mit einer Glaspaste sowie gegebenenfalls einem Verdünner zu einer druckfähigen Paste gemischt, die dann auf ein Trägerplättchen aus $Al_2O_3$, das zuvor mit kammartig ineinandergreifenden Elektroden bedruckt wurde, aufgedruckt und bei 850 °C gesintert wird. Der so entstandene Sensor ist verhältnismäßig niederohmig, weist eine lineare Kennlinie auf und ist wenig anfällig gegen Störimpulse, die von anderen elektrischen Aggregaten herrühren, was ihn insbesondere für eine Verwendung im Fahrgastraum von Kraftfahrzeugen prädestiniert.

FIG. 1

$Cr_2O_3 + V_2O_5 + Na_2WO_4$
2 : 1 : 1

## Feuchtesensor

### Stand der Technik

Die Erfindung geht aus von einem Verfahren zur Herstellung eines Feuchtesensors nach der Gattung des Hauptanspruchs und bezieht sich ebenso auf ein Stoffgemisch zur Herstellung eines solchen Sensors sowie auf den Sensor selbst. Aus der GB-PS 1 422 182 ist ein Feuchtesensor bekannt, der aus $Cr_2O_3$ und $V_2O_5$ im Gewichtsverhältnis 1:1 besteht, Perlenform aufweist, bei 1550 °C gesintert wird und im fertigen Zustand einen verhältnismäßig hohen Widerstand aufweist. Dieser Feuchtesensor ist in der Herstellung verhältnismäßig kompliziert, weist durch den ziemlich hohen Widerstand eine kleinere Meßempfindlichkeit auf und ist darüber hinaus störungsanfälliger im Hinblick auf Störimpulse, wie sie beispielsweise im Kraftfahrzeug auftreten.

### Vorteile der Erfindung

Das erfindungsgemäße Verfahren mit den kennzeichnenden Merkmalen des Hauptanspruchs sowie der nach diesem Verfahren hergestellte Feuchtesensor haben demgegenüber den Vorteil, daß der Sensor in sehr einfacher Weise und daher auch in großen Stückzahlen wirtschaftlich hergestellt werden kann, daß er einen verhältnismäßig niedrigen Widerstand aufweist, was eine größere Meßempfindlichkeit zur Folge hat, und daß die Störanfälligkeit nur noch gering ist. Schießlich zeigt der Widerstand eine lineare Abhängigkeit von der relativen Feuchte, was die Signalauswertung erleichtert.

Durch die in den Unteransprüchen aufgeführten Maßnahmen sind vorteilhafte Weiterbildungen und Verbesserungen des im Hauptanspruch angegebenen Verfahrens möglich. Besonders vorteilhaft ist es, von einem Stoffgemisch auszugehen, welches $Cr_2O_3$, $V_2O_5$ und $Na_2WO_4$ im Gewichtsverhältnis 2,5:1:1 enthält. Es ist weiter vorteilhaft, aus diesem Pulvergemisch unter Zusatz einer Glaspaste und gegebenenfalls eines Verdünners eine druckfähige Paste herzustellen und diese auf ein Trägerplättchen aus $Al_2O_3$ aufzudrucken, das zuvor mit kammartig ineinandergreifenden Elektroden bedruckt wurde.

### Zeichnung

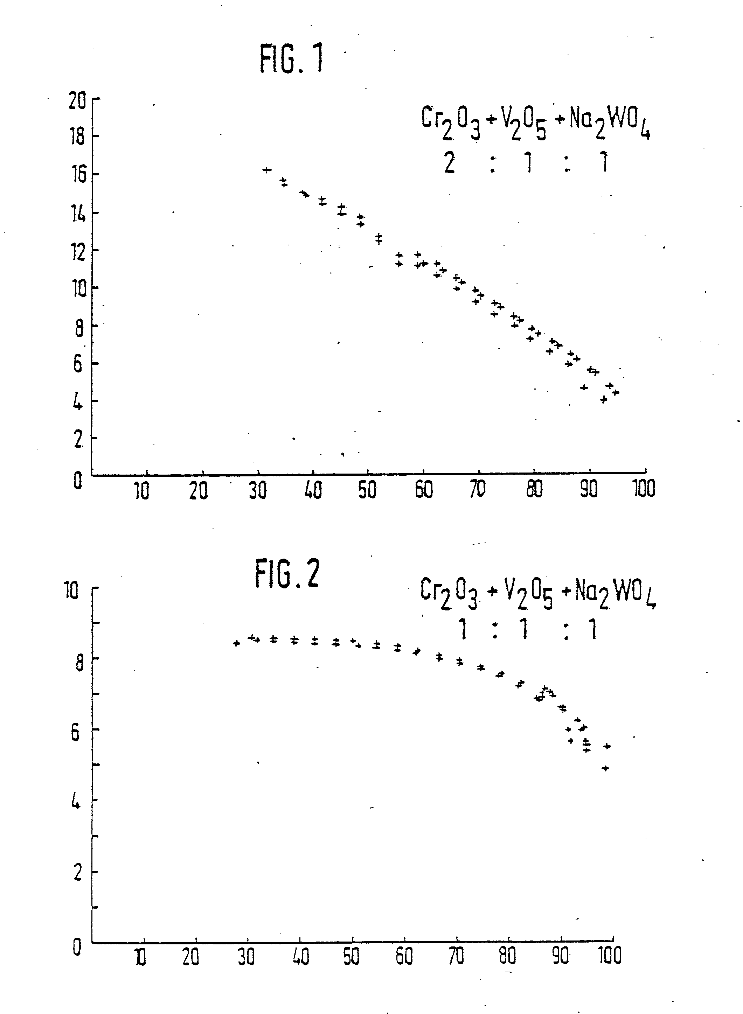

Ein Ausführungsbeispiel der Erfindung ist in der nachfolgenden Beschreibung näher erläutert. Die Figuren 1 bis 6 zeigen für verschiedene Mischungsverhältnisse von $Cr_2O_3$, $V_2O_5$ und $Na_2WO_4$ die Abhängigkeit des Widerstandes von der relativen Feuchte, wobei Figur 1 ein bevorzugtes Beispiel darstellt.

### Beschreibung des Ausführungsbeispiels

$Cr_2O_3$, $V_2O_5$ und $Na_2WO_4$ werden im Wesichtsverhältnis 2,5:1:1 vorgemischt und diese Mischung in einer Pulvermühle homogenisiert, danach eine Stunde lang bei 550 °C vorgesintert und dann erneut in einer Pulvermühle aufgemahlen, so daß die Korngröße bei etwa 1 $\mu$m liegt. Diesem Pulver werden dann 10 % einer Glaspaste als Bindemittel zugesetzt. Dabei hat sich eine solche vom Typ 4011C der Firma Electro Science Laboratory (ESL) besonders bewährt. Die so entstandene Paste wird gegebenenfalls noch mit soviel eines Verdünners, bestehend aus Benzylalkohol unt Terpineol, versetzt, daß sie druckfähig wird. Danach wird die druckfähige Paste auf ein Trägerplättchen aus Aluminiumoxid mit den Abmessungen 6 x 50 mm, auf welchem sich kammertig inanandergreifende Elektroden aus Platin, Gold oder Palladium/Silber mit entsprechenden Anschlüssen befinden, aufgedruckt. Dabei weist jede der Elektroden etwa 50 Zähne auf. Nach 15 Minuten Zwischentrocknung bei 100 °C wird die Sensorschicht auf dem Trägerplättchen 1 Stunde bei 850 °C gesintert.

Die so hergestellten Sensoren haben einen relativ niedrigen Widerstand von etwa 4 k Ohm bei 95 % relativer Feuchte und etwa 16 k Ohm bei 25 % relativer Feuchte und eine sehr gute Linearität, wie dies in Figur 1 an einem Beispiel mit dem Gewichtsverhältnis der Komponenten $Cr_2O_3$, $V_2O_5$ und $Na_2WO_4$ = 2:1:1 dargestellt ist, bei welcher, wie auch in allen anderen Figuren, der elektrische Widerstand in k Ohm gegen die relative Feuchte in Prozent aufgetragen ist. Dabei ist meßtechnisch jedoch zu beachten, daß die Messung, um Polarisationseffekte zu vermeiden, nicht mit permanentem Gleichstrom erfolgen darf, sondern entweder mit ständig wechselnder Stromrichtung oder mit gepulstem Gleichstrom, wie dies in der Patentanmeldung P 36 11 468.5 mit der Bezeichnung "Verfahren zum Betreiben eines Sensors und Vorrichtung zur Durchführung des Verfahren" beschrieben ist. Die in den Figuren dargestellten Kurven wurden nach dem dort beschriebenen Verfahren mit gepulstem Gleichstrom gewonnen.

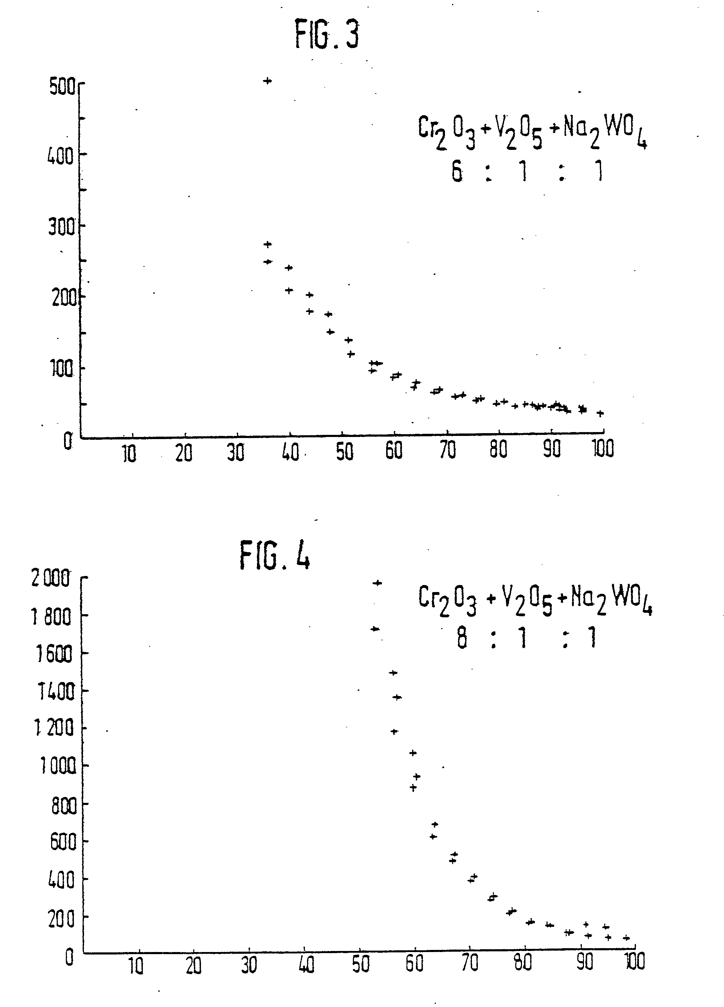

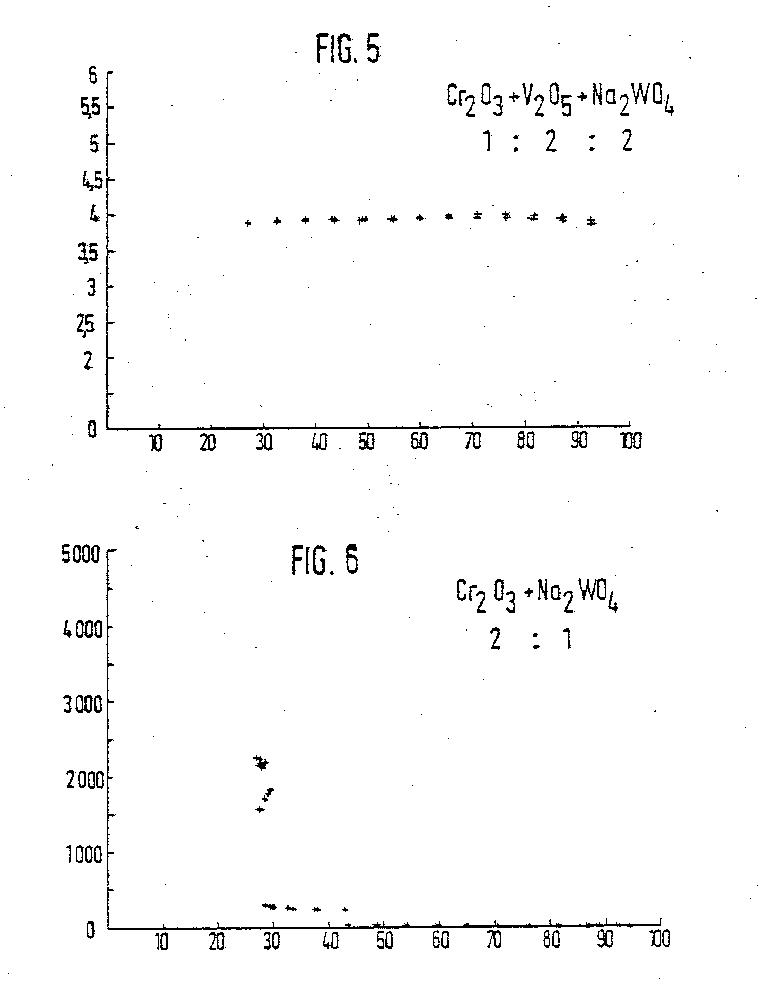

Um zu zeigen, welchen Einfluß die Mengenanteile der einzelnen Komponenten des Stoffgemischs auf den Verlauf der Kurven haben, ist in den Figuren 2 bis 6 die genannte Abhängigkeit des Widerstandes von der relativen Feuchte für verschiedene andere Gewichtsverhältnisse der drei Komponenten $Cr_2O_3$, $V_2O_5$ und $Na_2WO_4$ dargestellt. In Figur 2 ist der Kurvenverlauf für ein Verhältnis 1:1:1 dargestellt. Eine Abhängigkeit des Widerstands von der relativen Feuchte ist hier erst oberhalb von 70 % relative Feuchte festzustellen. Der Widerstandsbereich liegt mit 6 bis 8 k Ohm noch niedriger als bei dem optimalen Gewichtsverhältnis 2 bzw. 2,5:1:1. In Figur 3 ist der Kurvenverlauf für ein Gewichtsverhältnis 6:1:1 dargestellt. Dieser Verlauf ist nicht mehr linear und ab etwa 70 % relativer Feuchte ist praktisch keine Abhängigkeit des Widerstandes von der relativen Feuchte mehr meßbar. Der Widerstandsbereich liegt mit 50 bis 300 k Ohm höher als bei dem optimalen Gewichtsverhältnis. In Figur 4 ist der Kurvenverlauf für ein Gewichtsverhältnis 8:1:1 dargestellt, wobei festzustellen ist, daß mit einem solchen Sensor unterhalb von ca. 60 % relativer Feuchte die Messung sehr aufwendig wird. Der Widerstandsbereich liegt mit 200 bis 2000 k Ohm noch höher als bei den zuvor genannten Beispielen. In Figur 5 ist der Kurvenverlauf für einen Sensor mit sehr geringem Chromoxidgehalt dargestellt, nämlich für das Gewichtsverhältnis 1:2:2 bzw. 0,5:1:1. Hier zeigt der Widerstand überhaupt keine Abhängigkeit von der relativen Feuchte, der Widerstand bleibt konstant bei etwa 4 k Ohm. Insgesamt zeigt sich an den Kurven der Figuren 2 bis 5, daß die Krümmung der Kennlinie deutlich vom Chromoxidgehalt abhängt und daß die Erniedrigung des Widerstandes durch einen höheren $V_2O_5$-und $Na_2WO_4$-Zusatz bewirkt wird. In Figur 6 schließlich ist ein Beispiel dargestellt, in welchem kein $V_2O_5$ enthalten ist und das Gewichtsverhältnis $Cr_2O_3$ zu $Na_2WO_4$ 2:1 beträgt. Zwischen etwa 40 und 100 % relativer Feuchte ist der Widerstand sehr niedrig und praktisch unabhängig von der relativen Feuchte, zwischen 30 und 40 % relativer Feuchte folgt ein leichter Anstieg, der unterhalb von 30 % relativer Feuchte in einen steilen Anstieg übergeht. Dieser Figur ist also zu entnehmen, daß die Reduzierung des Widerstandes insbesondere durch den Gehalt an $Na_2WO_4$ bewirkt wird.

Den vorausgehenden Ausführungen sowie den Figuren ist deutlich zu entnehmen, daß mit einem Sensor, bei dem das Gewichtsverhältnis von $Cr_2O_3$, $V_2O_5$ und $Na_2WO_4$ gleich 2 bis 2,5:1:1 ist, eine Meßvorrichtung für die relative Feuchte zur Verfügung steht, die einfach und kostengünstig durch Dickschichttechik herzustellen ist, eine lineare Kennlinie aufweist, was die Signalauswertung erleichtert, sowie eine gute Meßempfindlichkeit dadurch aufweist, daß er verhältnismäßig niederohmig ist. Darüber hinaus ist dieser Sensor wenig anfällig gegen Störimpulse, was ihn insbesondere für die Verwendung im Kraftfahrzeug prädestiniert, da durch die hier zahlreich vorhandenen elektrischen Vorrichtungen eine große Anzahl von Störimpulsen auftreten kann.

**Ansprüche**

1. Verfahren zur Herstellung eines Sensors zur Bestimmung der relativen Feuchte aufgrund der Widerstandsänderung eines keramischen Materials, dadurch gekennzeichnet, daß ein Gemisch aus $Cr_2O_3$, $V_2O_5$ und $Na_2WO_4$ homogenisiert, vorgesintert und mit einer Glaspaste versetzt wird, daß diese Mischung zwischen zwei Elektroden auf einen Träger aufgebracht und das Ganze dann gesintert wird.

2. Verfahren nach Anspruch 1, dadurch gekennzeichnet, daß ein Gemisch aus $Cr_2O_3$, $V_2O_5$ und $Na_2WO_4$ im Verhältnis von 2,5:1: Gewichtsteilen homogenisiert, bei ca. 550 °C vorgesintert und erneut aufgemahlen wird, daß diesem Pulver ca. 10 Gew.-% einer Glaspaste und gegebenenfalls soviel eines Verdünners zugesetzt wird, daß die entstehende Paste druckfähig ist, daß diese Paste sodann auf ein Trägerplättchen aus $Al_2O_3$, das zuvor mit kammartig ineinandergreifenden Elektroden bedruckt wurde, aufgedruckt und das Ganze dann bei 850 °C gesintert wird.

3. Stoffgemisch zur Herstellung eines Sensors zur Bestimmung der relativen Feuchte aufgrund der Widerstandsänderung eines keramischen Materials, das $Cr_2O_3$ und $V_2O_5$ enthält, gekennzeichnet durch einen Gehalt an $Na_2WO_4$.

4. Stoffgemisch nach Anspruch 3, dadurch gekennzeichnet, daß es aus $Cr_2O_3$, $V_2O_5$ und $Na_2WO_4$ im Gewichtsverhältnis 1,5 bis 3,0:1:1 besteht.

5. Stoffgemisch nach Anspruch 4, dadurch gekennzeichnet, daß es aus $Cr_2O_3$, $V_2O_5$ und $Na_2WO_4$ im Gewichtsverhältnis 2,5:1:1 besteht.

6. Sensor zur Bestimmung der relativen Feuchte aufgrund der Widerstandsänderung eines keramischen Materials, hergestellt aus einem Stoffgemisch nach einem der Ansprüche 3 bis 5 gemäß dem Verfahren nach einem der Ansprüche 1 und 2.

7. Verwendung eines Sensors nach Anspruch 6 im Fahrgastraum von Kraftfahrzeugen.

## FIG. 1

$Cr_2O_3 + V_2O_5 + Na_2WO_4$

2 : 1 : 1

## FIG. 2

$Cr_2O_3 + V_2O_5 + Na_2WO_4$

1 : 1 : 1

## FIG.3

$Cr_2O_3 + V_2O_5 + Na_2WO_4$

6 : 1 : 1

## FIG. 4

$Cr_2O_3 + V_2O_5 + Na_2WO_4$

8 : 1 : 1

## FIG. 5

$Cr_2O_3 + V_2O_5 + Na_2WO_4$

1 : 2 : 2

## FIG. 6

$Cr_2O_3 + Na_2WO_4$

2 : 1